Europäisches Patentamt

European Patent Office

Office européen des brevets

(19)

(11) Numéro de publication: **0 120 724**
**B1**

(12) # FASCICULE DE BREVET EUROPÉEN

(45) Date de publication du fascicule du brevet:
22.07.87

(51) Int. Cl.⁴: **A 23 J 1/12**, A 23 L 1/10

(21) Numéro de dépôt: 84400240.2

(22) Date de dépôt: 03.02.84

(54) Procédé de production d'aliments protéinés et de divers sous-produits à partir de céréales.

(30) Priorité: 22.02.83 FR 8302813

(43) Date de publication de la demande:
03.10.84 Bulletin 84/40

(45) Mention de la délivrance du brevet:
22.07.87 Bulletin 87/30

(84) Etats contractants désignés:
DE GB IT LU NL

(56) Documents cité:
EP-A-0 022 619
FR-A-2 401 617
GB-A-895 145
US-A-4 056 636

(73) Titulaire: Chambre Regionale d'Agriculture de Picardie, 19 bis rue Alexandre Dumas, F-80045 Amiens (FR)

(72) Inventeur: Segard, Emile, 33 rue Hurtebise, F-60200 Compiegne (FR)
Inventeur: Monceaux, Philippe, Résidence des Veneurs C 114 75 rue Carnot, F-60200 Compiegne (FR)

(74) Mandataire: Hirsch, Marc- Roger, Cabinet Hirsch 34 rue de Bassano, F-75008 Paris (FR)

EP 0 120 724 B1

## Description

La présente invention a pour objet un procédé de production d'aliments protéinés à partir de céréales et de récupération éventuelle de l'amidon, sous forme d'hydrolysats d'amidon, en tant que sousproduit. Elle concerne également les aliments protéinés et hydrolysats d'amidon ainsi obtenus ainsi qu'une installation pour la mise en oeuvre de ce procédé.

On connaît divers procédés de production de protéines et éventuellement d'amidon, matières qui sont respectivement valorisées pour l'alimentation (humaine ou animale) ou dans l'industrie, notamment l'industrie du glucose. Il est connu que ces procédés:

- nécessitent un fractionnement des moutures de céréales pour séparer les enveloppes et cuticules fibreuses, germes et divers types de farines amylacées plus ou moins riches en protéines;

- consomment de grandes quantités d'eau pour les séparations physiques et les affinages des différentes fractions solides, séparées en suspension. Les procédés les plus performants nécessitent des quantités d'eau au moins égales à 3 m³ par tonne de céréales brutes, ce qui outre les incidences sur les investissements, pose des problèmes graves d'effluents, car les constituants hydrosolubles qui représentent au minimum 10 % des matières sèches sont entraînées dans les eaux de traitement et sont donc perdues pour une valorisation.

En fait, ces procédés connus qui visent à obtenir séparément les protéines et éventuellement à récupérer l'amidon, donnent également sous forme séparée les fibres et germes, appelées sons et issues, dont les principes nutritifs sont en général perdus.

On connait du FR-A- 77 26621 un procédé de production de protéines alimentaires d'origine végétale, avec élimination des substances toxiques et non protéiques, comprenant diverses étapes différentes de celles de l'invention.

Le US-A-4 056 636 décrit un procédé de conversion d'amidon cellulosique dégraissé et de déchets contenant de la protéine, comprenant également diverses étapes différant de celles de l'invention.

La présente invention a pour objet un procédé perfectionné de traitement des céréales permettant d'obvier les inconvénients des procédés connus d'une part et surtout, d'autre part, d'obtenir des produits enrichis en protéines (en des teneurs au moins égales à 25 % des matières sèches). Ce procédé permet un épuisement poussé de la charge organique des eaux de traitement, permettant à la fois une consommation d'eau réduite grâce à des recyclages élevés et une réduction importante de la charge des rejets.

Un autre avantage de ce procédé est de permettre une valorisation en alimentation humaine des fractions fibreuses (sons et issues) qui sont enrichies en protéines (25 % des matières sèches) et peuvent être produites sous forme de biscuits ou produits secs protéinés, tels que flakes (flocons) ou extrudés divers.

La présente invention a pour objet un procédé de production d'aliments protéinés à partir de céréales comportant les étapes suivantes:

a) broyage des céréales et trempage du broyat obtenu dans de l'eau;

b) séparation mécanique du mélange obtenu dans l'étape (a) pour produire un sediment contenant la majeure partie des matières insolubles et de l'amidon A et une suspension contenant au minimum 60 % des matières azotées initialement présentes;

c) séparation ultérieure de la suspension ainsi produite dans l'étape (b) pour isoler une fraction insoluble contenant au minimum 60 % des protéines initialement présentes et une fraction surnageante;

d) mélange du sédiment obtenu dans l'étape (b) avec ladite fraction surnageante de l'étape (c) pour obtenir une suspension finale contenant au minimum 90 % de l'amidon initial;

e) hydrolyse de l'amidon contenu dans cette suspension finale de l'étape (d) par addition d'amylase thermostable;

f) séparation du mélange résultant de l'hydrolyse de l'étape (e) pour recueillir un hydrolysat surnageant et une fraction insoluble;

g) fermentation de la fraction insoluble de l'étape (f) après mise en suspension dans de l'eau pour l'enrichir en protéines de levures;

h) séparation de la suspension fermentée de l'étape (g) en un effluent recyclable et un sédiment constituant un premier aliment protéiné.

Selon une forme d'exécution de l'invention, le trempage est réalisé sous agitation à une température inférieure ou égale à 50°C, le rapport volumique broyat total/eau présente étant de l'ordre de 1,3/2,5.

Selon une autre forme d'exécution de l'invention, le trempage est réalisé en 30 minutes environ.

Selon encore une autre forme d'exécution de l'invention, la séparation mécanique de l'étape (b) est effectuée par centrifugation ou hydrocyclonage, de telle sorte que la distribution de sortie soit formée de 25 à 45 % de sédiment pour 55 à 75 % de suspension, le sédiment contenant de 40 à 55 % de matière sèche et la suspension contenant de 10 à 20 % de matière sèche.

Suivant un mode de réalisation de l'invention, la séparation ultérieure de l'étape (c) est effectuée après addition à la suspension produite dans l'étape (b) d'une amylase thermostable, dans des conditions de concentration et d'activité permettant de solubiliser au minimum 90 % de l'amidon résiduel présent, la température de la suspension étant maintenue à 90°C ± 10°C pendant une durée de 10 à 30 minutes.

Suivant un autre mode de réalisation de l'invention, la séparation ultérieure de l'étape (c) est effectuée après addition à la suspension produite dans l'étape (b) d'une amylase thermostable, dans des conditions de concentration et d'activité permettant de solubiliser au minimum 90 % de l'amidon résiduel présent, la température de la suspension étant maintenue à 55°C ± 5°C pendant une durée de 20 à 40 minutes.

Suivant un autre mode encore de réalisation de l'invention, la séparation ultérieure de l'étape (c) est une séparation mécanique effectuée sur la suspension produite dans l'étape (b), sans aucune addition d'amylase à ladite suspension, à une température inférieure ou égale à 50°C, de telle sorte que la fraction surnageante obtenue dans l'étape (c) contienne au minimum 90 % de l'amidon résiduel présent dans la suspension initiale.

Selon une forme d'exécution de l'invention, la fraction surnageante produite dans l'étape (c) est réunie au sédiment obtenue dans l'étape (b), le mélange formé étant agité et ajusté par addition d'eau à une concentration maximale de 25 à 40 % de matière sèche.

Selon encore une autre forme d'exécution de l'invention, le mélange de la fraction surnageante produite dans l'étape (c) et du sédiment de l'étape (b) est hydrolysé dans l'étape (e) à un pH dont la valeur est de 6 ± 0,5, à une température de 90°C ± 10°C, pendant une durée de séjour de 90 à 150 minutes, l'addition continue d'amylase thermostable et de ses activateurs, tels les ions $Ca^{++}$, étant ajustée de telle sorte que, au minimum 85 % de l'amidon initial soit hydrolysé en oligosides solubles.

La présente invention a en outre pour objet, un procédé de production d'aliment protéiné comportant les étapes suivantes:

a) broyage des céréales et trempage du broyat obtenu dans de l'eau;

b) séparation mécanique du mélange obtenu dans l'étape (a) pour produire un sédiment contenant la majeure partie des matières insolubles et de l'amidon A et une suspension contenant au minimum 60 % des matières azotées initialement présentes;

c) séparation ultérieure de la suspension ainsi produites dans l'étape (b) pour isoler une fraction insoluble contenant au minimum 60 % des protéines initialement présentes et une fraction surnageante;

d) mélange du sédiment obtenu dans l'étape (b) avec ladite fraction surnageante de l'étape (c) pour obtenir une suspension finale contenant au minimum 90 % de l'amidon initial;

e) hydrolyse de l'amidon contenu dans cette suspension finale de l'étape (d) par addition d'amylase thermostable;

f) séparation du mélange résultant de l'hydrolyse de l'étape (e) pour recueillir un hydrolysat surnageant et une fraction insoluble;

i) fermentation de l'hydrolysat surnageant produit dans l'étape (f), à un pH ajusté à une valeur comprise entre 3,0 et 4,5 par une polulation de levure des genres Candida Tropicalis ou Candida Utilis (dont les souches sont agrées pour l'alimentation humaine ou animale) à une température de 30°C ± 5°C;

j) séparation de l'effluent produit pour récupérer un deuxième aliment protéiné.

Selon une forme d'exécution de l'invention, l'hydrolysat surnageant produit dans l'étape (f) est soumis à une fermentation (i) avec une souche permettant la production d'un produit de bioconversion et la récupération d'un sédiment de fermentation constituant un autre aliment protéiné.

De préférence, les effluents produits au cours des diverses étapes sont réutilisés, au poins en partie, dans les étapes nécessitant l'addition d'eau, d'une part et, d'autre part, les divers aliments protéinés, tels quels ou après ajout d'une farine riche en amidon, peuvent être soumis à un traitement de finition tel que la cuisson-extrusion.

La présente invention a également pour objet une installation pour la mise en oeuvre du procédé précité, comprenant successivement:

- une zone de broyage des céréales et de trempage du broyat obtenu,
- une zone de séparation mécanique de la suspension précédemment produite,
- une zone de séparation de la suspension produite dans la zone précédente,
- une zone de mélange du sédiment ainsi obtenu,
- une zone d'hydrolyse de l'amidon contenue dans la suspension résultante,
- une zone de séparation du mélange formé,
- une zone de fermentation de la fraction insoluble séparée,
- une zone de séparation de la suspension fermentée produite.

L'invention a en outre pour objet une installation comprenant successivement:
- une zone (a) de broyage des céréales et de trempage du broyat obtenu,
- une zone de séparation mécanique (b) de la suspension produite dans la zone (a),
- une zone (c) de séparation de la suspension produite dans la zone (b),
- une zone (d) de mélange du sédiment obtenu dns la zone (c),
- une zone d'hydrolyse (e) de l'amidon contenue dans la suspension obtenu dans la zone (d),
- une zone de séparation (f) du mélange provenant de la zone (d),
- une zone de fermentation (i) de l'hydrolysat surnageant séparé dans la zone (f),
- une zone de séparation (j) de la suspension fermentée produite dans la zone (i).

D'autres buts et avantages de la présente invention apparaîtront à la lecture de la description suivante et des figures.
- la figure 1 est un schéma de principe du procédé selon l'invention;
- la figure 2 représente un schéma d'une première variante d'une installation selon l'invention;
- la figure 3 représente un schéma d'une deuxième variante d'une installation selon l'invention.

La matière première à traiter, consistant en une céréale, contenue dans une trémie 1, est amenée par une conduite 2 dans une zone de broyage 10, d'où elle passe à une zone de trempage 12 dans laquelle par la conduite 11 sont amenées des eaux de recyclage.

La matière broyée en 10 est trempée dans la zone de trempage 12 à 50°C maximum dans les eaux de

3

recyclage (2 m$^3$/t de matière première brute). La matière première est broyée en 10 pour que sa granulométrie soit telle qu'elle permette une séparation en 13 de la suspension solide-liquide, donnant une suspension surnageante contenant préférentiellement les protéines dispersées (avec une proportion variable d'amidon séquestré, type amidon B) et un sédiment contenant préférentiellement en mélange les grains libres d'amidon (type A) et les fibres germes et issues diverses. On peut utiliser pour la séparation tout moyen de séparation solide-liquide, selon le type de céréales, tels que des hydrocyclones ou des séparateurs centrifuges. On emploie avantageusement pour cette séparation un décanteur centrifuge horizontal à vis, dans des conditions adaptées au type de céréales. La suspension surnageante est soumise en 14 à des opérations de lavages, avec ou sans traitement par des amylases selon les compositions relatives protéines/ amidon des lots travaillés. On introduit par les canalisations 3 et 4, les eaux de recyclage et de l'eau propre, additionnée ou non d'amylase. On applique en 14 des conditions connues, utilisées pour éliminer les grains d'amidon et les résidus d'enveloppes, de telle sorte que, dans la suspension finale, on obtienne des protéines représentant plus de 85 % des matières sèches. A la sortie des opérations 14, la suspension est soumise à une séparation solide-liquide en 16, de façon à recueillir un insoluble riche en protéine qui est introduit dans une cuve de mélange en 17. Le surnageant de la séparation et les eaux de lavage issues de 14 contiennent l'amidon soluble qui est rassemblé en 15 avec la fraction insoluble de la séparation 13, ce qui permet de reconstituer en 15 une suspension contenan les sons et issues, l'amidon en grain et l'amidon solublisé ou non provenant des opérations réalisées en échange thermique (chauffage) dans le cas du traitement enzymatique ou un lavage, par exemple sur un tamis vibrant dans l'autre variante.

La suspension totale reconstituée en 15 est envoyée dans l'enceinte 20 où elle est additionnée à nouveau par la conduite 5 d'amylase thermostable et on y réalise une amylolyse poussée à chaud de façon à libérer du glucose et des oligoglucosides à partir des amidons rassemblés dans la cuve 15. Les conditions de température et de temps de séjour sont ajustées en fonction du type d'amylase utilisée et du type de céréale traitée, de facon à hydrolyser le plus complètement possible les amidons présents.

La suspension finale est soumise à une séparation solide-liquide dans un séparateur 21 ce qui fournit un surnageant soluble, recueilli dans la cuve 22, et une fraction insoluble envoyée dans la cuve 23.

Dans la cuve 22, le surnageant soluble contenant l'hydrolysat d'amidon est traité, à un pH inférieur ou égal à 5 et avec une aération énergique sous agitation, par des levures L des genres Candida Tropicalis ou Candida Utilis, dont les souches sont agréées pour des usages alimentaires amenées par une conduite 6. Les conditions particulières de température et de temps de séjour dans la cuve de fermentation 22 font appel à des données connues et sont adaptées, selon le type de céréales traitées, aux concentrations en sucres du surnageant soluble obtenu dans le séparateur 21. On réalise une séparation solide-liquide dans le séparateur 24 pour recueillir la crème de levure dans un tank 25; puis l'envoyer dans la cuve de mélange 17 pour obtenir en 30 le produit alimentaire fini $PF_1$; le surnageant de la séparation 24 est stocké en 26, dans une cuve tampon.

Les surnageants de la fermentation 24 stockés en 26 sont mélangés dans la cuve 23 avec la fraction insoluble recueillie lors de la séparation 21. On ajoute par la conduite 7 la quantité d'eau propre nécessaire pour obtenir une suspension finale comprise entre 10 et 18 % de matières sèches. La cuve de fermentation 23, maintenue à pH inférieur ou égal à 5 sous agitation et aération, est initialement inoculée par des levures L amenée par la conduite 8, du même type que dans la cuve de fermentation 22 et les conditions de température et de temps de séjour sont stabilisées pour permettre la consommation d'au minimum 50 % des sucres solubles présents, qui sont convertis en levures permettant un enrichissement en protéines de la fraction insoluble obtenue dans le séparateur 21. A la sortie de la cuve 23, on réalise une séparation solide-liquide en 27 pour obtenir un sédiment stocké en 28 et les effluents résiduels épuisés, recueillis dans une cuve tampon en 29. Une proportion de ces effluents, variables selon le type de céréales traitées, est recyclée par la conduite 11 vers la zone de trempage 12, les excédents non recyclés sont éliminés en rejet.

Les sons et issues enrichis en protéines à la suite de la fermentation en 23, sont séchés selon une méthode connue en 27 (sur cylindre de type HATMAKER, par exemple) pour obtenir une farine à 25 % d'humidité au plus, contenant au minimum 25 % de protéines sur matières sèches. A cette farine stockée dans-la cuve 28, on peut avantageusement ajouter dans l'appareil d'extrusion 40 environ 30 % d'une farine traditionnelle d'une céréale telle que blé, maïs ou sorgho et les ingrédients adéquats (saccharose, sels, etc.) amenés par la conduite 9 pour obtenir par cuisson-extrusion des produits finis alimentaires $PF_2$ contenant sur matière sèche environ 20 % de protéines, 20 % d'amidon et 60 % de fibres et divers. Selon les conditions d'extrusion en 40, ces produits finis protéinés à bas niveau calorique (20 % d'amidon) pourront être indifféremment de la forme biscuits, flakes, crakers, etc.

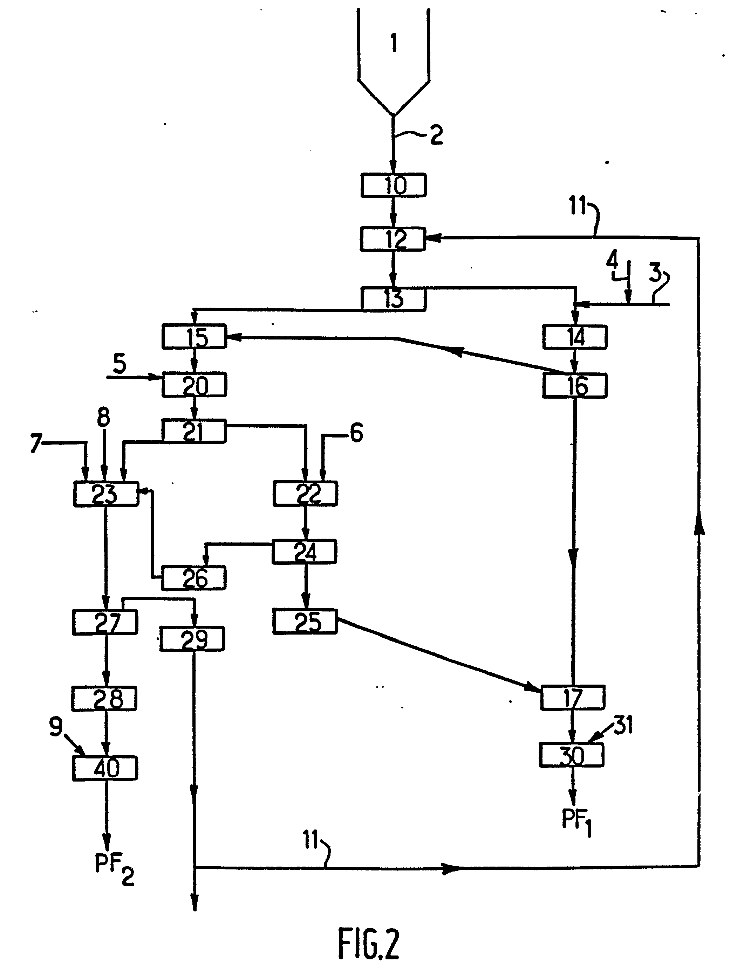

Selon la variante de la figure 2, on mélange avant séchage la fraction protéique provenant du séparateur 16 avec la biomasse de levures stockées en 25, pour obtenir une farine brute contenant au minimum 60 % de protéines sur matière sèche.

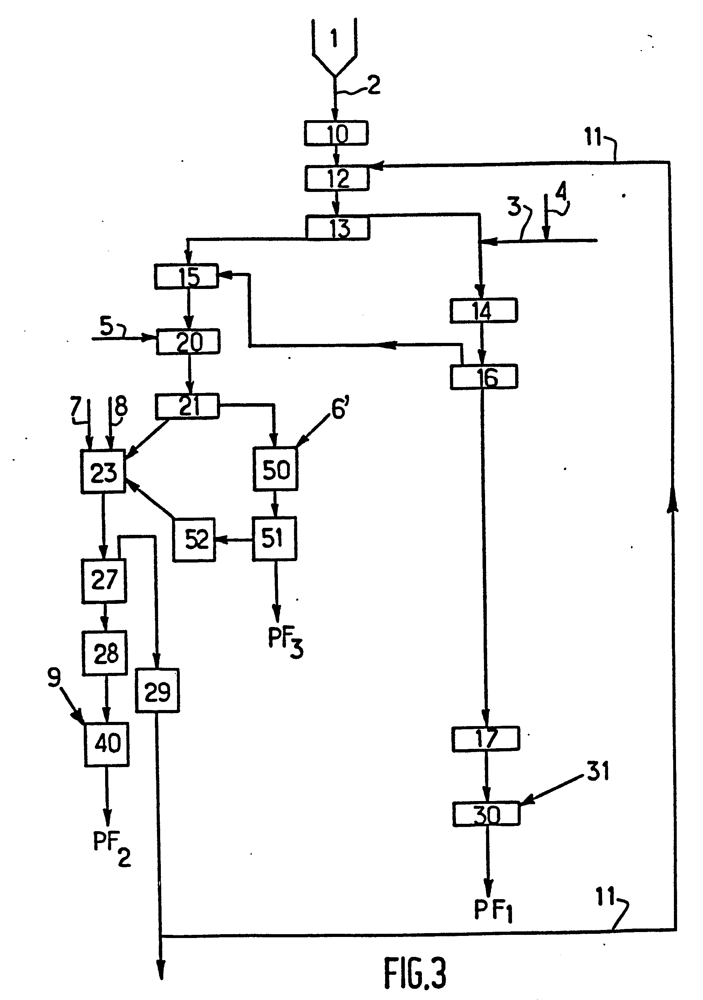

Selon une variante du procédé, décrite à la figure 3, le surnageant de la séparation 21 peut être soumis dans une cuve de fermentation 50 à une fermentation particulière avec une souche indéterminée X amenée par la conduite 6' permettant de produire par bioconversion un produit de haute valeur ajoutée, qui est isolé en 51 par les opérations adaptées permettant d'obtenir le produit final $PF_3$, tandis que les eaux résiduelles issues de l'extraction de $PF_3$ sont stockées en 52.

Selon cette variante de la figure 2, on sèche directement par un procédé connu la fraction protéique provenant de la séparation 16 et on obtiendra une farine brute contenant au moins 70 % de protéines sur matière sèche, les surnageants de la fermentation 50 sont stockés dans la cuve tampon 52 et envoyés dans la cuve 23 où ils se réunissent à la fraction insoluble venant de 21.

On pourra avantageusement en 30 par la conduite 31, ajouter 50 % d'une farine de céréale, telle que blé, maïs ou sorgho et préparer des produits finis par cuisson-extrusion sous différentes formes, dont la composition finale sera en moyenne de 45 % d'amidon et 35 % de protéines sur matière sèche. Les deux variantes du présent procédé permettent donc, er résumé, de produire des aliments protéinés et des sous-produits éventuels selon la variante 2, grâce à des opérations combinées conduisant à de nombreux avantages dont l'essentiel est résumé ci-dessous:

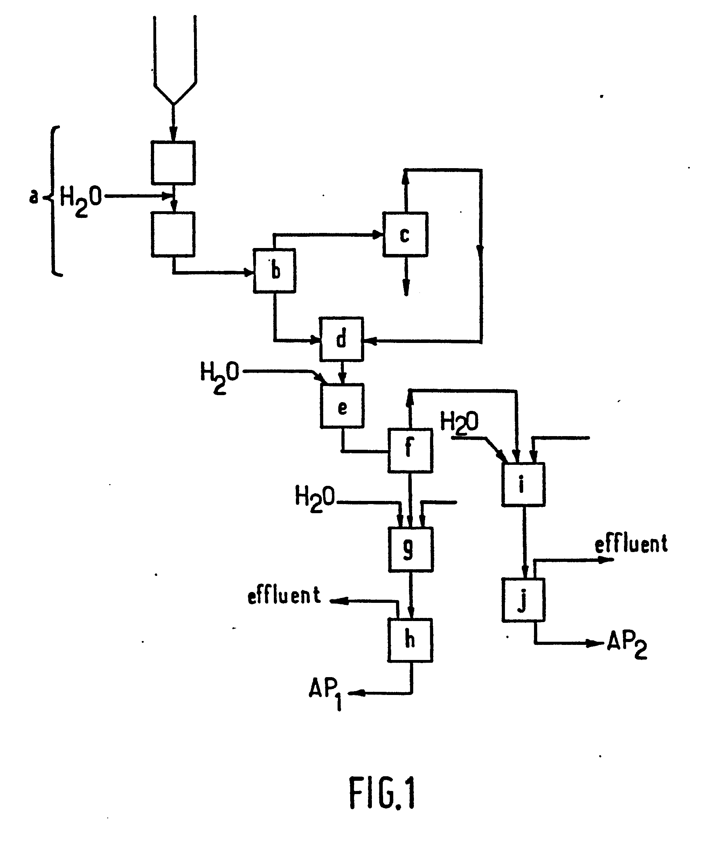

- la céréale est utilisée directement dans le procédé, sans nécessiter aucune opération préalable de fractionnement traditionnel destiné à obtenir une farine dégermée et débarrassée des sons et issues;
- les opérations de séparation sont réalisées en phase humide en utilisant des eaux de recyclage à faible charge biologique, ce qui permet de réduire la consommation d'eau;
- les protéines initiales, séparées dés le début avec la fraction hydrosoluble sont récupérées avec le maximum de rendement et à un niveau de pureté supérieur à 70 % des MS grâce à une liquéfaction enzymatique de l'amidon réalisée à chaud, ce qui permet une thermocoagulation des protéines solubles (ceci ne s'appliquant que dans le cas du traitement enzymatique en 14);
- l'hydrolyse de l'amidon en présence des sons et issues permet à la fois de produire à partir de l'hydrolysat soit des protéines de levures (variante 1) soit des sous-produits de bioconversion (variante 2) et d enrichir en protéines les sons et issues;
- les deux fractions protéiques obtenues (protéines initiales, avec ou sans les protéines de levure, et sons protéinées) peuvent être transformées par cuisson-extrusion en produits finis alimentaires divers, après une supplémentation en farines brutes riches en amidon;
- le procédé peut être exploité en continu sans difficultés. On décrit ci-dessous à titre l'application de la variante de la figure 1 pour le cas du blé.

<u>EXEMPLE: Production d'aliments protéinés à partir du blé</u>

Le blé brut, à un taux moyen d'humidité de 15 %, est broyé directement (en 10) dans un appareil classique à grille pour obtenir une farine brute en sortie dont la granulométrie est inférieure ou égale à 800 µm. La farine est mise en suspension (en 12) dans les eaux de recyclage amenées par la conduite 11 à raison de 2 m$^3$ d'eau par tonne de farine brute. Un trempage de 30 min sous agitation est réalisé à une température inférieure ou égale à 30°C, le plus communément à la température ambiante. La suspension est séparée en continu sur un séparateur horizontal à vis 13 de telle sorte que l'on obtienne un sédiment à 44-45 % de matières sèches (envoyé en 15) dont la teneur en protéines (exprimée en N x 5,7) doit être inférieure ou égale à 5,5 % des matières sèches; ce sédiment contiendra une proportion d'amidon supérieure ou égale à 70 % des matières sèches. La suspension surnageante (envoyée en 14) contenant 12 à 13 % de matière sèche, présente une teneur en protéines totales (en N x 5,7) de 34 à 35 % des matières sèches. Cette suspension sera additionnée d'une préparation d'amylase du type thermamyl de NOVO (amenée par la conduite 3) à raison d'environ 120 g d'enzyme par tonne de matière première initiale et le mélange envoyé dans un échangeur 14 pour un échange thermique à une temperature de 80° ± 10° C durant un temps de séjour de 12 min ± 2 min. A la sortie du traitement thermique 14, la suspension agitée est introduite dans un décanteur horizontal 16 pour obtenir un sédiment à 35-40 % de matière sèche, contenant au minimum 60 % des protéines (en N x 5,7) présentes dans la suspension soumise au traitement ci-dessus (liquéfaction-coagulation).

Le surnageant de la séparation 16 est mélangé au sédiment de la première centrifugation (en 15); ce surnageant entraîne 96 à 97 % de l'amidon présent dans la suspension hydrolysée à chaud précédemment. On ajoute à cette suspension (par la conduite 5) 700 g de la préparation de thermamyl précédemment citée par tonne de matière première brute d'entrée et on maintient sous agitation pendant 2 h à 95°C, la quantité des ions Ca++ étant ajustée en fonction de l'enzyme utilisé. On sépare à nouveau sur un décanteur horizontal 21 le mélange obtenu pour obtenir un sédiment à 40-42 % de matière sèche, contenant 35 à 38 % des matières sèches en sucres totaux résiduels entraînés. Le surnageant correspondant à l'hydrolysat d'amidon contient un équivalent en sucres réducteurs représentant, au minimum 77 % de l'amidon vrai initialement présent dans la matière première. Cet hydrolysat est traité en continu dans la cuve 22 par une population stabilisée d'une souche connue de Candida Tropicalis ou Candida Utilis, l'ensemble étant maintenu pendant 4 h à 30°C et à pH inférieur ou égal à 4,8, sous agitation et aération; les conditions optimales de cette opération font appel à des éléments connus qui ne font pas l'objet de l'invention.

La crème de levure obtenue par un moyen quelconque de séparation 24 contient au moins 48 % des matières sèches en protéines (N 6,25) et représente au minimum 20 % de l'amidon vrai initialement présent dans la matière première. Cette crème protéique est envoyée dans la cuve 25 où elle est mélangée au sédiment protéique 17 pour être séchée (à 10 à 12 % d'humidité résiduelle) par un procédé classique; on pourra avantageusement utiliser un séchage sur tambour du type HATMAKER. Le produit séché contiendra au minimum 40 % des matières sèches en protéines. A partir de ce produit, on pourra préparer en 30 après addition d'amidon sous une forme quelconque, divers produits finis obtenus dans des conditions connues, soit par cuisson-extrusion, soit par les voies traditionnelles exploitées pour les fabrications de biscuits, de pâtes alimentaires ou de produits divers. Le surnageant 26, obtenu après incubation (en 22) en présence des levures et contenant au maximum 10 % de matières sèches, est mélangé au sédiment de la séparation antérieure 21 dans la cuve 23. Cette dernière est équipée des mêmes dispositifs d'agitation, d'aération et de régulation de pH que la cuve 22; une population de Candida Utilis est entretenue à 30°C; on maintient la suspension pendant 4 h de temps de séjour à un pH inférieur ou égal à 4,8, la dilution étant maintenue à 15 % de matière sèche par addition d'eau. La séparation sur décanteur horizontal 27 fournit un sédiment dont la teneur en protéines est au minimum de 25 % des matières sèches de cette fraction. Aprés séchage, le produit est traité en 40 selon un quelconque procédé connu permettant d'obtenir des produits alimentaires finis. Le surnageant final 29 contient moins de 10 % de matières sèches résiduelles dont on recycle 50 % en tête.

Un exemple du bilan matière moyen obtenu est résumé ci-dessous:

```
                                              ⎧ N 5,7   = 100 kg
        1.000 kg de blé brut                  ⎪ Amidon = 550 kg
     représentant 850 kg de MS               ⎨ Divers = 200 kg
                                              ⎩

                                        MS = 765 kg
                                        dont:
                                        N 5,7   =  40 kg
                                        Amidon = 530 kg


                                                          eau
     MS = 85 kg
     dont: protéines = 60 kg

                                        hydrolysat        Insoluble
                                            +
                                         levures
                                                              + levures

                                        MS = 230 kg      MS = 535 kg
                                        dont protéines
                                        100 kg

   ┌──────────────────────┐             ┌──────────────────────┐
   │    MS = 315 kg        │             │  MS 250 kg           │
   │  protéines 160 kg     │             │  dont protéines      │
   └──────────────────────┘             │  65 kg               │
                                         └──────────────────────┘

                                               recyclage et
                                                  rejet
                                               MS = 285 kg
```

. MS = matières sèches

. N 5,7 : la teneur en protéines est 5,7 fois la teneur en azote
         organique végétal déterminée.

0 120 724

## Revendications

1. Procédé de production d'aliments protéinés à partir de céréales, caractérisé en ce qu'il comporte les étapes suivantes:

a) broyage des céréales et trempage du broyat obtenu dans de l'eau;

b) séparation mécanique du mélange obtenu dans l'étape (a) pour produire un sédiment contenant la majeure partie des matières insolubles et de l'amidon A et une suspension contenant au minimum 60 % des matières azotées initialement présentes;

c) séparation ultérieure de la suspension ainsi produite dans l'étape (b) pour isoler une fraction insoluble contenant au minimum 60 % des protéines initialement présentes et une fraction surnageante;

d) mélange du sédiment obtenu dans l'étape (b) avec ladite fraction surnageante de l'étape (c) pour obtenir une suspension finale contenant au minimum 90 % de l'amidon initial;

e) hydrolyse de l'amidon contenu dans cette suspension finale de l'étape (d) par addition d'amylase thermostable;

f) séparation du mélange résultant de l'hydrolyse de l'étape (e) pour recueillir un hydrolysat surnageant et une fraction insoluble;

g) fermentation de la fraction insoluble de l'étape (f) après mise en suspension dans de l'eau pour l'enrichir en protéines de levures;

h) séparation de la suspension fermentée de l'étape (g) en un effluent recyclable et un sédiment constituant un premier aliment protéiné.

2. Procédé selon la revendication 1, caractérisé en ce que le trempage est réalisé sous agitation à une température inférieure ou égale à 50°C, le rapport volumique broyat total/eau présente étant de l'ordre de 1,3/2,5.

3. Procédé selon la revendication 2, caractérisé en ce que le trempage est réalisé en 30 minutes environ.

4. Procédé selon une quelconque des revendications 1 à 3, caractérisé en ce que la séparation mécanique de l'étape (b) est effectuée par centrifugation ou hydrocyclonage, de telle sorte que la distribution de sortie soit formée de 25 à 45 % de sédiment pour 55 à 75 % de suspension produite dans l'étape (b), le sédiment contenant de 40 à 55 % de matière sèche et la suspension contenant de 10 à 20 % de matière sèche.

5. Procédé selon une quelconque des revendications 1 à 4, caractérisé en ce que la séparation ultérieure de l'étape (c) est effectuée après addition à la suspension produite dans l'étape (b) d'une amylase thermostable, dans des conditions de concentration et d'activité permettant de solubiliser au minimum 90 % de l'amidon résiduel présent, la température de la suspension étant maintenue à 90°C $\pm$ 10°C pendant la durée de 10 à 30 minutes.

6. Procédé selon une quelconque des revendications 1 à 4, caractérisé en ce que la séparation ultérieure de l'étape (c) est effectuée après addition à la suspension produite dans l'étape (b) d'une amylase thermostable, dans des conditions de concentration et d'activité permettant de solubiliser au minimum 90 % de l'amidon résiduel présent, la température de la suspensison étant maintenue à 55°C $\pm$ 5°C pendant une durée de 20 à 40 minutes.

7. Procédé selon une quelconque des revendications 1 à 4, caractérisé en ce que la séparation ultérieure de l'étape (c) est une séparation mécanique effectuée sur la suspension produite dans l'étape (b), sans aucune addition d'amylase à ladite suspension, à une température inférieure ou égale à 50°C, de telle sorte que la fraction surnageante obtenue dans l'étape (c) contienne au minimum 90 % de l'amidon résiduel présent dans la suspension initiale.

8. Procédé selon une quelconque des revendications 1 à 7, caractérisé en ce que la fraction surnageante produite dans l'étape (c) est réunie au sédiment obtenue dans l'étape (b), le mélange formé étant agité et ajusté par addition d'eau à une concentration maximale de 25 à 40 % de matière sèche.

9. Procédé selon une quelconque des revendications 1 à 8, caractérisé en ce que le mélange de la fraction surnageante produite dans l'étape (c) et du sédiment de l'étape (b) est hydrolysé dans l'étape (e) à un pH dont la valeur est de 6 $\pm$ 0,5, à une température de 90°C $\pm$ 10°C, pendant une durée de séjour de 90 à 150 minutes, l'addition continue d'amylase thermostable et de ses activateurs, tels les ions Ca + +, étant ajustée de telle sorte que, au minimum 85 % de l'amidon initial soit hydrolysé en oligosides solubles.

10. Procédé selon une quelconque des revendications 1 à 9, caractérisé en ce que l'hydrolysat surnageant produit dans l'étape (f) est soumis à une étape de fermentation (i), à un pH ajusté à une valeur comprise entre 3,0 et 4,5 par une population de levure des genres Candida Tropicalis ou Candida Utilis, dont les souches sont agréées pour l'alimentation humaine ou animale à une température de 30°C $\pm$ 5°C pour récupérer après séparation (j) de l'effluent un deuxième aliment protéiné.

11. Procédé selon une quelconque des revendications 1 à 9, caractérisé en ce que l'hydrolysat surnageant produit dans l'étape (f) est soumis à une fermentation (i) avec une souche permettant la production d'un produit de bioconversion et la récupération d'un sédiment de fermentation constituant un autre aliment protéiné.

12. Procédé selon une quelconque des revendications 1 à 11, caractérisé en ce que les effluents produits au cours des diverses étapes sont réutilisés, au moins en partie, dans les étapes nécessitant l'addition d'eau.

13. Procédé selon une quelconque des revendications 1 à 12, caractérisé en ce que les divers aliments protéinés, tels quels ou après ajout d'une farine riche en amidon, sont soumis à un traitement de finition tel que la cuisson-extrusion.

7

14. Installation pour la mise en oeuvre du procédé selon une quelconque des revendications 1 à 9, caractérisée en ce qu'elle comporte successivement:
- une zone (a) de broyage des céréales et de trempage du broyat obtenu,
- une zone de séparation mécanique (b) de la suspension produite dans la zone (a),
- une zone (c) de séparation de la suspension produite dans la zone (b),
- une zone (d) de mélange du sédiment obtenu dans la zone (c),
- une zone d'hydrolyse (e) de l'amidon contenue dans la suspension obtenue dans la zone (d),
- une zone de séparation (f) du mélange provenant de la zone (d),
- une zone de fermentation (g) de la fraction insoluble séparée dans la zone (f),
- une zone de séparation (h) de la suspension fermentée produite dans la zone (g) pour obtenir un sédiment constituant un premier aliment protéiné.

15. Installation pour la mise en oeuvre du procédé selon la revendication 10 ou selon la revendication 14, caractérisée en ce qu'elle comporte successivement:
- une zone (a) de broyage des céréales et de trempage du broyat obtenu,
- une zone de séparation mécanique (b) de la suspension produite dans la zone (a),
- une zone (c) de séparation de la suspension produite dans la zone (b),
- une zone (d) de mélange du sédiment obtenu dans la zone (c),
- une zone d'hydrolyse (e) de l'amidon contenue dans la suspension obtenue dans la zone (d),
- une zone de séparation (f) du mélange provenant de la zone (d),
- une zone de fermentation (i) de l'hydrolysat surnageant séparé dans la zone (f),
- une zone de séparation (j) de la suspension fermentée produite dans la zone (i).

**Patentansprüche**

1. Verfahren zur Herstellung proteinhaltiger Nahrungsmittel aus Getreide, dadurch gekennzeichnet, dass es folgende Verfahrensschritte umfasst:
(a) Zerkleinern des Getreides und so erzielten zerkleinerten Masse in Wasser:
(b) mechanisches Trennen des im Verfahrensschritt (a) erzielten Gemischs, um einen Niederschlag zu erhalten, der den grössten Teil der unlöslichen Stoffe und Stärke A enthält, sowie eine Suspension, die wenigstens 60 % der anfänglich vorliegenden stickstoffhaltigen Stoffe enthält;
(c) nachträgliches Trennen der so in Verfahrensschritt (b) erhaltenen Suspension, zwecks Scheidung einer wenigstens 60 % der ursprünglich vorliegenden Proteine enthaltenden Fraktion und einer obenstehenden Fraktion;
(d) Mischen des im Verfahrensschritt (b) erhaltenen Niederschlags mit der obenstehenden Fraktion des Verfahrensschrittes (c), zwecks Erzeugung einer endgültigen Suspension, die wenigstens 90 % der ursprünglich vorliegenden Stärke enthält;
(e) Hydrolysieren des in der endgültigen Suspension des Verfahrensschrittes (d) enthaltenen Stärke durch Beigabe wärmebeständiger Amylase;
(f) Trennen des durch die Hydrolyse des Verfahrensschrittes (e) erzeugten Gemischs, zwecks Herstellung eines obenstehenden Hydrolysats und einer unlöslichen Fraktion;
(g) Vergären der zuvor in Wasser suspendierten unlöslichen Fraktion des Verfahrensschrittes (f), zwecks Anreicherung derselben an Hefeproteinen;
(h) Trennen der in Verfahrensschritt (g) vergorenen Suspension zwecks Erzeugung eines rückführbaren Ausflusses und eines ein erstes proteinhaltiges Nahrungsmittel bildenden Niederschlags.
2. Verfahren nach Anspruch 1, dadurch gekennzéichnet, dass das Einweichen unter Rühren bei einer Temperatur von höchstens 50°C erfolgt, wobei das Volumenverhältnis "gesamte zerkleinerte Masse/anwesendes Wasser" etwa 1,5/2,5 beträgt.
3. Verfahren nach Anspruch 2, dadurch gekennzeichnet, dass das Einweichen während etwa 30 Minuten durchgeführt wird.
4. Verfahren nach einem der Ansprüche 1 bis 3, dadurch gekennzeichnet, dass die mechanische Trennung des Verfahrensschrittes (b) durch Zentrifugieren oder Hydrozyklonbehandlung erfolgt, derart, dass das Auslasserzeugnis 25 bis 45 % Niederschlag pro 55 bis 75 % der im Verfahrensschritt (b) erzeugten Suspension enthält, wobei der Niederschlag 40 bis 55 % Trockensubstanz und die Suspension 10 bis 20 % Trockensubstanz enthält.
5. Verfahren nach einem der Ansprüche 1 bis 4, dadurch gekennzeichnet, dass die nachträgliche Trennung im Verfahrensschritt (c) nach Beigabe einer wärmebeständigen Amylase zu der im Verfahrensschritt (b) erzeugten Suspension erfolgt, unter Konzentrations= und Aktivitätsbedingungen, die es ermöglichen, wenigstens 20 % der vorliegenden Reststärke löslich zu machen, wobei die Suspension 10 bis 30 Minuten lang auf einer Temperatur von 90°C ± 10°C gehalten wird.
6. Verfahren nach einem der Ansprüche 1 bis 4, dadurch gekennzeichnet, dass die nachträgliche Trennung im Verfahrensschritt (c) nach Beigabe einer wärmebeständigen Analyse zu der im Verfahrensschritt (b) erzeugten Suspension erfolgt, unter Konzentrations= und Aktivitätsbedingungen, die er ermöglichen, wenigstens 90 % der vorliegenden Reststärke löslich zu machen, wobei die Suspension 20 bis 40 Minuten lang auf einer Temperatur von 55°C ± 5°C gehalten wird.

7. Verfahren nach einem der Ansprüche 1 bis 4, dadurch gekennzeichnet, dass die nachträgliche Trennung im Verfahrensschritt (c) eine mechanische Trennung der im Verfahrensschritt (b) gewonnenen Suspension ist, ohne Beigabe von Amylase zu dieser Suspension, und bei einer Temperatur von gleich oder weniger als 50°C durchgeführt wird, derart, dass die im Verfahrensschritt (c) erzeugte obenstehende Fraktion wenigstens 90 % der in der ursprünglichen Suspension vorliegenden Reststärke enthält.

8. Verfahren nach einem der Ansprüche 1 bis 7, dadurch gekennzeichnet, dass die im Verfahrensschritt (c) gewonnene obenstehende Fraktion dem in Verfahrensschritt (b) gewonnenen Niederschlag beigemengt, das so erzeugte Gemisch gerührt und durch Beigabe von Wasser auf eine maximale Trockensubstanzkonzentration von 25 bis 40 % eingestellt wird.

9. Verfahren nach einem der Ansprüche 1 bis 8, dadurch gekennzeichnet, dass das Gemisch von vom Verfahrensschritt (c) herrührender obenstehender Fraktion und vom Verfahrensschritt (b) herrührendem Niederschlag im Verfahrensschritt (e) bei einer Temperatur von 90°C ± 10°C 90 bis 150 Minuten lang bis zur Erreichung eines pH-Wertes von 6 ± 0,5 hydrolisiert wird, wobei die kontinuierliche Beimengung der wärmebeständigen Amylase und deren Aktivatoren, wie Ca++ Ionen, derart bemessen wird, dass ein Anteil von wenigstens 85 % der ursprünglich vorliegenden Stärke durch die Hydrolyse in lösbare Oligoside umgewandelt wird.

10. Verfahren nach einem der Ansprüche 1 bis 9, dadurch gekennzeichnet, dass das im Verfahrensschritt (f) erzeugte obenstehende Hydrolysat bei einem pH-Wert von 3,0 bis 4,5 vermittels eines für die menschliche oder tierische Ernährung zulässigen Hefestammes der Art Candida Tropilalis oder Candida Utilis bei einer Temperatur von 30°C ± 5°C einer Gärung (i) unterzogen wird, um nach Abscheidung (j) des Abflusses ein zweites proteinhaltiges Nahrungsmittel zu bilden.

11. Verfahren nach einem der Ansprüche 1 bis 9, dadurch gekennzeichnet, dass das im Verfahrensschritt (f) gewonnene obenstehende Hydrolysat vermittels eines die Erzeugung eines Bio-Umwandlungsproduktes und die Gewinnung eines ein weiteres proteinhaltiges Nahrungsmittel bildenden Niederschlags gestattenden Stammes einer Gärung (i) unterworfen wird.

12. Verfahren nach einem der Ansprüche 1 bis 11, dadurch gekennzeichnet, dass die bei den verschiedenen Verfahrensschritten anfallenden Ausflüsse wenigstens teilweise in den eine Beimengung von Wasser erfordernden Verfahrensschritten wiederverwendet werden.

13. Verfahren nach einem der Ansprüche 1 bis 12, dadurch gekennzeichnet, dass die verschiedenen proteinhaltigen Nahrungsmittel im ursprünglichen Zustand oder nach Beimengung eines stärkereichen Mehls einer eendgültigen Behandlung, wie Erhitzen und Extrusion unterzogen werden.

14. Einrichtung zur Durchführung des Verfahrens nach einem der Ansprüche 1 bis 9, dadurch gekennzeichnet, dass sie folgende nacheinander angeordnete Einrichtungteile umfasst:
- eine Zerkleinerungs — und Einweichzone (a) zum Zerkleinern des Getreides und zum Einweichen der erzielten zerkleinerten Masse;
- eine Trennzone (b) zum mechanischen Trennen der in der Zone (a) erzeugten Suspension;
- eine Trennzone (c) zum Trennen der in der Zone (b) anfallenden Suspension:
- eine Mischzone (d) zum Mischen des in der Zone (c) anfallenden Niederschlags;
- eine Hydrolysezone (e) zum Hydrolysieren der im in der Zone (d) erzeugten Niederschlag enthaltenen Stärke;
- eine Trennzone (f) zum Trennen des von der Zone (d) herrührenden Gemisches;
- eine Gärzone (g) zum Vergären der in der Zone (f) abgeschiedenen unlöslichen Fraktion;
- eine Trennzone (h) zum Trennen der in der Zone (g) anfallenden vergorenen Suspension, zwecks Erzeugung eines ein erstes proteinhaltiges Nahrungsmittel bildenden Niederschlags.

15. Einrichtung zur Durchführung des Verfahrens nach Anspruch 10 oder 14, dadurch gekennzeichnet, dass sie folgende nacheinander angeordnete Einrichtungteile umfasst:
- eine Zerkleinerungs— und Einweichzone (a) zum Zerkleinern des Getreides und zum Einweichen der erzielten zerkleinerten Masse;
- eine Trennzone (b) zum mechanischen Trennen der in der Zone (a) anfallenden Suspension;
- eine Trennzone (c) zum Trennen der in der Zone (b) erzeugten Suspension;
- eine Mischzone (d) zum Mischen des in der Zone (c) erzeugten Niederschlags;
- eine Hydrolysezone (e) zum Hydrolysieren der in der in Zone (d) anfallenden Suspension enthaltenen Stärke;
- eine Trennzone (f) zum Trennen des aus der Zone (d) herrührenden Gemischs;
- eine Gärzone (i) zum Vergären des in der Zone (f) abgeschiedenen obenstehenden Hydrolysats;
- eine Trennzone (j) zum Trenne der in Zone (i) anfallenden vergorenen Suspension.

## Claims

1. Process of producing protein-containing foodstuff from cereals, characterized in that it comprises the steps of:
(a) crushing the cereals and soaking the resulting crushed mass in water;

(b) mechanically separating the mixture obtained in step (a) so as to produce a sediment containing the major part of the insoluble substances and "A" starch, and a suspension containing at least 60 % of the initially present nitrogen-containing matter;

(c) subsequently separating the suspension thus produced in step (b) for isolating an insoluble fraction containing at least 60 % of the initially present proteins, and a supernatent fraction;

(d) mixing the sediment obtained in step (b) with said supernatent fraction of step (c) so as to obtain a final suspension containing at least 90 % of the initial starch;

(e) hydrolyzing the starch contained in said final suspension of step (d) by adding thermostable amylase thereto;

(f) separating the mixture resulting from the hydrolysis of step (e) so as to collect a supernatent hydrolysate and an insoluble fraction;

(g) fermenting the insoluble fraction of step (f) after suspending the same in water, so as to enrich said fraction with yeast proteins;

(h) separating the fermented suspension of step (g) into a recyclable effluent and a sediment constituting a first protein-containing foodstuff.

2. Process according to claim 1, characterized in that said step of soaking is carried out under stirring at a temperature lower than or equal to 50°C, the volume ratio of total crushed matter to water present being equal to about 1.3/2.5.

3. Process according to claim 2, characterized in that said step of coating is carried out during about 30 minutes.

4. Process according to any one of claims 1 to 3, characterized in that said mechanical separation step (b) is carried out by centrifuging or hydrocycloning in such a manner that the distribution in the outlet material corresponds to 25 to 45 % sediment and 55 to 75 % suspension produced in step (b), said sediment containing 40 to 55 % dry matter, and said suspension containing 10 to 20 % dry matter.

5. Process according to any one of claims 1 to 4, characterized in that said subsequent separation of step (c) is carried out after addition of a thermostable amylase to the suspension produced in step (b), under concentration and activity conditions which allow at least 90 % of the residual starch present to be lyophilized, the temperature of said suspension being maintained at 90°C ± 10°C during 10 to 30 minutes.

6. Process according to any one of claims 1 to 4, characterized in that said subsequent separation step (c) is carried out after addition of a thermostable amylase to the suspension produced in step (b), under concentration and activity conditions which allow at least 90°C of the residual starch present to be rendered souble, the temperature of said suspension being maintained at 55°C ± 5°C during 20 to 40 minutes.

7. Process according to any one of claims 1 to 4, characterized in that said subsequent separation step (c) is a mechanical separation carried out on the suspension produced in step (b), without any addition of amylase to said suspension, at a temperature lower than or equal to 50°C, in such a manner the supernatent fraction obtained in step (c) contains at least 90 % of the residual starch present in the initial suspension.

8. Process according to any one of claims 1 to 7, characterized in that the supernatent fraction produced in step (c) is admixed to the sediment obtained in step (b), the resulting mixture being stirred and adjusted, by addition of water, to a maximum concentration of 25 to 40 % dry matter.

9. Process according to any one of claims 1 to 8, characterized in that the mixture of supernatent fraction produced in step (c) and sediment produced in step (b) is hydrolyzed in step (e) to a pH of 6 ± 0.5, at a temperature of 90°C ± 10°C during 90 to 150 minutes, the continuous addition of thermostable amylase and its activators, such as Ca++ ions, being adjusted in such a manner that at least 85 % of the initial starch is hydrolyzed into soluble oligosides.

10. Process according to any one of claims 1 to 9, characterized in that the supernatent hydrolysate produced in step (f) is submitted to a fermentation step (i) at a pH value adjusted to 3.0 to 4.5, by means of a strain of yeast of the type Candida Tropicalis or Candida Utilis, the species of which are accepted for the human or animal alimentation, at a temperature of 30°C ± 5°C, so as to produce after a step (j) of separating the effluent a second protein-containing foodstuff.

11. Process according to any one of claims 1 to 9, characterized in that the supernatent hydrolysate produced in step (f) is subjected to a step (i) of fermentation with a strain allowing to obtain a bioconversion product and to collect a fermentation sediment which constitutes a second protein-containing foodstuff.

12. Process according to any one of claims 1 to 11, characterized in that the effluents produced in the various steps are at least partially re-used in those steps which require the addition of water.

13. Process according to any one of claims 1 to 12, characterized in that the various protein-containing foodstuffs as obtained or after addition of a flour with high starch content, are subjected to a finishing treatment, such as heating and extrusion.

14. Installation for carrying out the process according to any one of claims 1 to 9, characterized in that it comprises, in succession:

- a crushing and soaking zone (a) for crushing the cereals and soaking the crushed matter thus obtained;
- a zone (b) of mechanical separation of the suspension produced in zone (a);
- a zone (c) of separation of the suspension produced in zone (b);
- a zone (d) of mixing the sediment obtained in zone (c);
- a hydrolysis zone (e) for hydrolyzing the starch contained in the suspension produced in zone (d);
- a zone (f) of separation of the mixture issuing from zone (d);

- a fermentation zone (g) for fermenting the insoluble fraction separated in zone (f);

- a zone (h) of separation of the fermented suspension produced in zone (g) for obtaining a sediment constituting a first protein-containing foodstuff.

15. Installation for carrying out the process according to claim 10 to 14, characterized in that it comprises, in succession:

- a crushing and soaking zone (a) for crushing the cereals and soaking the crushed matter thus obtained;

- a zone (b) of mechanical separation of the suspension produced in zone (a);

- a zone (c) of separation of the suspension produced in zone (b);

- a zone (d) of mixing the sediment obtained in zone (c);

- a hydrolysis zone (e) for hydrolyzing the starch contained in the suspension produced in zone (d);

- a zone (f) of separation of the mixture issuing from zone (d);

- a fermentation zone (i) for fermenting the supernatent hydrolysate separated in zone (f);

- a zone (j) of separation of the fermented suspension produced in zone (i).

FIG.1

FIG.2

FIG.3